# EUROPÄISCHE PATENTSCHRIFT

(11) **EP 0 290 798 B1**
(45) Veröffentlichungstag und Bekanntmachung des Hinweises auf die Patenterteilung: **09.06.1993**
(21) Anmeldenummer: 88105783.0
(22) Anmeldetag: 12.04.1988
(51) Int. Cl.: B29C 65/44, B29D 23/22

(54) **Verfahren zur Herstellung eines metallbeschichteten faserverstärkten Kunststoffrohrs**
Method of manufacturing a metal-coated fibre-reinforced tube of plastics
Procédé pour la fabrication d'une matière plastique renforcée de fibres, à revêtement métallique

(30) Priorität: 13.05.1987 DE 3715894
(43) Veröffentlichungstag der Anmeldung: 17.11.1988
(73) Patentinhaber: SIGRI GREAT LAKES CARBON GmbH, D-65203 Wiesbaden (DE)
(72) Erfinder: Habenicht, Hinrich, Dipl.-Ing., D-8906 Gersthofen (DE)

(56) Entgegenhaltungen:
- DE-A- 2 247 738
- DE-A- 2 631 374
- DE-A- 2 938 790
- US-A- 2 723 426
- US-A- 3 377 657

## Beschreibung

Die Erfindung betrifft ein Verfahren zur Herstellung eines metallbeschichteten Rohrs aus faserverstärktem Kunststoff, bei welchem mit Duroplasten imprägnierte Fasergelege auf einen Dorn gewickelt und die Wickelkörper zum Härten des Duroplasten erwärmt werden.

Um Hohlkörper, wie Rohre, mit beliebigen Durchmessern mit gleichmäßig starken Schichten aus korrosionsbeständigen, gut haftenden thermoplastischen Kunststoffen auszukleiden, wird nach der DE-OS 22 47 738 das thermoplastische Auskleidungsmittel in Form eines an einem Ende geschlossenen Schlauches in das Rohr eingelegt, anschließend der Schlauch unter Druck gesetzt und danach das Rohr unter Aufrechterhaltung des Drucks mindestens auf Schmelz- oder Erweichungstemperatur des Kunststoffs erwärmt, wobei sich der Thermoplastschlauch an die Rohrinnenwand anlegt. Die Haftung der thermoplastischen Auskleidung kann durch Anoxidieren der inneren Oberfläche des Metallrohres oder durch Aufbringen einer dünnen Schicht aus duroplastischem Haftvermittler auf diese Oberfläche vor dem Einlagen des Schlauches verbessert werden.

Eines im Prinzip ähnlichen Verfahrens zum Auskleiden eines Rohres mit einer Schicht aus thermoplastischem Kunststoff bedient sich das Verfahren nach der DE-OS 29 38 790. Hier wird eine Röhre aus einem Thermoplasten in das innen zu beschichtende Rohr eingeschoben, dessen innere Oberfläche mit einem thermisch aktivierbaren Kleber überzogen ist. Der Kleber kann stattdessen auch auf die äußere Oberfläche der thermoplastischen Röhre vor deren Einschieben in das Rohr aufgebracht werden. An die in dem Rohr befindliche thermoplastische Röhre wird sodann eine gleichförmige, rein radiale Kraft angelegt und durch fortschreitendes Erhitzen mittels einer sich entlang des Rohres bewegenden Wärmequelle die Verklebung zwischen der thermoplastischen Innenröhre und dem diese umgebenden Rohr bewirkt. Die beim Erhitzen der Anordnung in der Klebezone vorhandenen und entstehenden Gase und Dämpfe werden mit Hilfe einer an einem Rohrende angebrachten Vorrichtung entfernt. Die beiden beschriebenen Verfahren betreffen die Herstellung von Rohrauskleidungen aus thermoplastischen Kunststoffen. Die Herstellung von Rohren aus faserverstärkten Kunststoffen bedient sich modifizierter Verfahren.

Bei einem häufig verwendeten Verfahren zur Herstellung von Hohlkörpern, besonders von Rohren aus faserverstärkten Kunststoffen, werden mit einem härtenden Kunstharz imprägnierte Multifilament-Garne und Bänder auf einen Dorn gewickelt und die Wickelkörper zur Härtung des Harzes erhitzt (z.B. DE-OS 33 44 989). Die Filamente sind in den gewickelten Rohren mehr oder weniger stark gegen die Rohrachse geneigt, da Wickeln parallel zur Achse mit den für die Herstellung von Rohren gebräuchlichen Wickelvorrichtungen nicht möglich ist. Die Biegesteifigkeit der Körper ist aufgrund der Faserorientierung kleiner als von Körpern mit unidirektionaler Faseranordnung. Bei der Herstellung von gewickelten Rohren mit kleineren Durchmessern und Verwendung von vergleichsweise spröden keramischen Fasern als Verstärkungsfasern sind schließlich Filamentbrüche nicht ausgeschlossen, die die Rohrfestigkeit weiter vermindern. Zur Herstellung von Rohren aus faserverstärkten Kunststoffen ist es auch bekannt, mit einem Kunstharz imprägnierte Gewebestücke in vorbestimmter Ordnung auf einem Dorn abzulegen. Dorn und Gewebestapel werden in eine aus zwei Halbschalen bestehende Preßform eingelegt, der Stapel zusammengepreßt und das Harz gehärtet. Der Durchmesser des Dorns entspricht bei diesem Verfahren dem inneren Rohrdurchmesser und der innere Durchmesser der Preßform dem äußeren Rohrdurchmesser. Da in einem Gewebe die Fäden wenigstens in zwei Richtungen verlaufen, kann die bei unidirektionaler Faseranordnung mögliche Biegesteifigkeit des Rohrs nicht erreicht werden. Nachteilig sind bei diesem Verfahren auch der große technische Aufwand und der große Schnittabfall.

Ein derartiges Verfahren zur Herstellung von Rohren oder rohrförmigen Körpern aus Lagen faserverstärkten Kunststoffs ist in der US-Patentschrift 2,723,426 offenbart. Ein in radiale Richtung dehnbarer Dorn aus einem starren Kern und einer den Kern umgebenden expandierbaren Silikongummihülle wird hier mit einer Folie aus gewebeverstärktem Kunststoff, z.B. einer Folie aus Glasfasergewebe mit Polyesterharzmatrix, gegebenenfalls mehrlagig umwickelt, der bewickelte Dorn in eine Preßform gelegt und dann der faserverstärkte Wickelkörper durch Dehnen der den starren Dorn umgebenden Hülle gegen die Innenwand der Preßform gedrückt. Anschließend wird die Preßform erhitzt und das Kunstharz ausgehärtet. Nach dem Abkühlen kann der Form ein maßgenauer, faserverstärkter, rohrförmiger Körper entnommen werden. Nach einem anderen, in der DE-OS 26 31 374 beschriebenen ähnlichen Verfahren wird ein aus einem Vlies aus Asbest- oder Kohlenstoffasern und einem bei niedrigem Druck härtenden Kunstharz bestehender Verbundwerkstoff in mehreren Lagen auf einen Gummischlauch oder -Sack gewickelt, der Wickel in eine Preßform eingelegt, die Form geschlossen und der Wickel dann in der Form bis zum Erweichen des Matrixharzes erwärmt. Danach wird der Gummischlauch oder -Sack mit Preßluft aufgeblasen und so lange unter Druck gehalten, bis der nachfolgend auf Härtetemperatur des Harzes aufgeheizte Wickel gehärtet ist.

Es ist auch bekannt, Fasergelege zu Rohren zu verarbeiten, deren Garne oder Filamente in eine einzige Richtung, beispielsweise in axiale Richtung verlaufen. Zur Herstellung der Gelege werden die Garne aufgefächert, mit Kunstharz imprägniert und nach Trocknung das Harz durch Erwärmen teilweise ausgehärtet. Die als "Prepregs" bezeichneten kunstharzimprägnierten Gelege werden gestapelt, gepreßt und unter Druck zur vollständigen Härtung des Harzes erwärmt. Durch die US-PS 4 289 168 ist es bekannt, kunstharzimprägnierte Gelegebahnen zu einem rohrförmigen Hohlkörper zu wickeln, den Körper in eine Hohlform einzulegen und durch Einschieben eines Dorns bei höherer Temperatur den Wickelkörper zu verdichten. Bei diesem Verfahren werden die kunstharzimprägnierten Gelege auch relativ zueinander in axialer Richtung verschoben, wodurch der Zusammenhalt des Schichtpakets beeinträchtigt werden kann. Bei einem anderen Verfahren werden die auf einem Dorn laminierten mit Kunstharz imprägnierten Gelege erwärmt und mit dem Dorn durch ein Mundstück gezogen (EP-OS 0 193 900). Auch bei diesem Verfahren können Relativverschiebungen innerhalb des laminierten Rohrs nicht ausgeschlossen werden.

Die Oberfläche von Rohren aus faserverstärkten Kunststoffen genügt nicht immer den technischen Anforderungen und die Rohre werden in diesen Fällen häufig mit Beschichtungen versehen, die den jeweiligen Anforderungen an Härte, Erosionsfestigkeit usw., genügen. Als Walzen für Druckmaschinen verwendete Rohre sind beispielsweise mit einer Schicht aus Chrom, Nickel oder einem anderen widerstandsfähigen Metall beschichtet (DE-GM 84 06 019). Zum Aufbringen der Metallbeschichtung wird nach Beizen oder Ätzen der Oberfläche des faserverstärkten Kunststoffrohrs stromlos eine Kupferschicht und auf der Kupferschicht galvanisch eine Schicht des widerstandsfähigen Metalls abgeschieden. Eine feste mechanische Haftung der Metallschicht wird nur erzielt, wenn die Metallabscheidung mit großer Sorgfalt durchgeführt wird. Trotzdem kommt es häufig, zumal bei starker mechanischer Belastung der Rohre, zu Ablösungen der Beschichtung. Widerstandsfähige Metallbeschichtungen können auch durch thermische Spritzverfahren etwa durch Plasma- oder Flammspritzen auf die Oberfläche der Rohre aufgetragen werden, z.B. Schichten aus Silicium oder CrMoAl-Legierungen (DE-OS 35 27 912). Die Schichten, die recht fest auf der Rohroberfläche haften, sind vergleichsweise rauh und lassen sich ohne zusätzliches Schleifen nur für spezielle Anwendungen verwenden.

Der Erfindung liegt daher die Aufgabe zugrunde, ein einstufiges Verfahren zur Herstellung von Rohren aus faserverstärktem Kunststoff zu schaffen, die eine große Biegesteifigkeit haben und deren Oberfläche mit einer festhaftenden Metallschicht geschützt ist.

Diese Aufgabe wird durch die Verfahren gemäß den unabhängigen Ansprüchen 1 bzw. 7 gelöst. Besondere Ausführungsarten dieser Verfahren sind in den jeweils zugehörigen abhängigen Ausprüchen angegeben.

Die für die erfindungsgemäßen Verfahren verwendeten Fasergelege sind mit einem teilgehärteten Kunstharz imprägniert (Prepreg). Zu ihrer Herstellung werden Garne mit einem duroplastischen Kunstharz beschichtet, aufgefächert und parallel zueinander in Form einer einige Zehntel bis einige Millimeter dicken Schicht abgelegt. Das überschüssige Harz wird beispielsweise durch Rollen oder Walzen abgequetscht und das Gelege zur teilweisen Härtung des Harzes erhitzt. Als Verstärkungsfasern sind alle zur Herstellung faserverstärkter Kunststoffe verwendeten Fasern geeignet, z.B. Glasfasern, keramische Fasern, Aramidfasern und vor allem Kohlenstoffasern, die sich durch ihren großen Elastizitätsmodul von 300 GPa und mehr auszeichnen. Die die Filamente des Fasergeleges untereinander verbindenden, eine im wesentlichen geschlossene Matrix bildenden Imprägnierharze sind duroplastische Harzsysteme, vor allem aus der Gruppe Epoxidharze, Polyesterharze und Phenolformaldehydharze, denen gegebenenfalls Härtungskatalysatoren zugesetzt sind. Besonders günstig verhalten sich Epoxidharze. Die Länge der Fasergelege entspricht in Richtung der Faserlängserstreckung wenigstens der Länge des herzustellenden Rohrs, die Breite ergibt sich näherungsweise aus π D d₁/d₂ (D - mittlerer Durchmesser des Rohrs, d₁-Dicke der Rohrwand, d₂-Dicke des Fasergeleges). Das Fasergelege wird zur Herstellung des faserverstärkten Rohrs derart aufgewickelt, daß die Filamente streng parallel zur Längsachse des Dorns verlaufen, da jede Abweichung von dieser Orientierung die Biegesteifigkeit verringert. Der Dorn besteht aus einem aufblasbaren gummielastischen Material wie Silicongummi, Kautschuk oder einer aus mehreren Segmenten zusammengesetzten durch Federkraft oder hydraulisch spreizbaren Metallhülse. Die Dorne gleich welcher Ausführung enthalten zweckmäßig als Kern eine Welle, von der Gummimantel bzw. Hülse in radialer Richtung wegbewegt werden, und sind mit einem Trennhilfsmittel beschichtet. Der Wickelkörper wird dann zusammen mit dem Dorn in ein Metallrohr eingelegt, wobei der Abstand zwischen der äußeren Oberfläche des Wickelkörpers und der Innenwandung des Metallrohrs möglichst klein sein sollte, vorzugsweise kleiner als 0,5 mm. Bei größeren Abständen können sich die Schichten des Wickelkörpers bei der Radialbewegung um größere Beträge gegeneinander verschieben, wodurch die unidirektionale Orientierung der Filamente gestört wird.

Art und Abmessung des Metallrohrs werden im wesentlichen durch die für die Verwendung des faserverstärkten Rohrs nötige Korrosions- und Verschleißfestigkeit und Härte bestimmt. Die Wandstärke der Metallrohre ist so bemessen, daß die Rohre sich beim Aufpressen des Wickelkörpers nicht bleibend verformen oder gar reißen. Können diese Bedingungen nicht erfüllt werden, etwa bei der Herstellung von Rohren mit einem sehr dünnen Metallbelag, beispielsweise einer Goldfolie, legt man die Metallfolie in ein Hilfsrohr größerer Wandstärke, das die Zugspannungen aufnimmt und nach Anpressen des Wickelkörpers wieder abgezogen wird. Besonders vorteilhaft ist die Verwendung von Stahlrohren, die auch bei kleiner Wandstärke hinreichend fest sind und deren äußere Oberfläche galvanisch oder durch ein thermisches Spritzverfahren mit einem anderen, für eine bestimmte Anwendung besser geeigneten Metall überzogen werden kann. Durch Spanen oder Ätzen kann die äußere Oberfläche auch einfach mit Oberflächenstrukturen versehen werden, die dem jeweiligen Verwendungszweck angepaßt sind. Die innere Oberfläche des Metallrohrs ist zur Verbesserung der mechanischen Haftung mit dem Wickelkörper zweckmäßig aufgerauht und besonders mit riefenförmigen Vertiefungen versehen, die die Haftkraft zwischen Schutzrohr und Wickelkörper verbessern.

Die Verbindung zwischen dem Wickelkörper aus kunstharzbeschichteten Fasern und dem Metallrohr wird durch Aufblasen bzw. Spreizung des Dorns hergestellt. Der Wickelkörper legt sich dabei dicht an die Konturen der Rohrinnenfläche an, deren Vertiefungen durch austretendes Kunstharz gefüllt werden. Unter Aufrechterhaltung des Drucks von etwa 4 bis 6 bar wird die gesamte Anordnung auf die Härtungstemperatur der Harzmatrix erhitzt, wobei Aufheizrate und Haltezeit erheblich von dem verwendeten Harzsystem abhängen. In der Regel beträgt die maximale Härtungstemperatur etwa 150 bis 180 °C, die zugleich die zulässige obere Anwendungstemperatur des beschichteten faserverstärkten Rohrs ist. Durch die Wärmebehandlung unter Druck wird das Matrixharz ausgehärtet und zugleich eine feste Verbindung zwischen dem Wickelkörper und dem den Wickelkörper umschließenden Metallrohr gebildet. Nach dem Abkühlen und Entspannen wird der Dorn entfernt und in die Stirnflächen des Rohrs werden in an sich bekannter Weise Lagerungen für Wellenstümpfe oder dgl. eingezogen und mit dem metallbeschichteten, faserverstärkten Kunststoffrohr verklebt.

Die wesentlichen Vorteile von erfindungsgemäß hergestellten Rohren sind die hohe Biegesteifigkeit, die etwa 20 bis 30 % größer ist als von gewickelten oder aus Gewebelagen hergestellten Rohren und die feste Haftung des metallischen Schutzes auf der Rohroberfläche. Zur Herstellung der metallischen Schutzschicht bedarf es keines besonderen Verfahrensschritts, sie ist vielmehr ein integraler Teil der Rohrherstellung. Faserverstärkte Kunststoffrohre haben eine wesentlich kleinere Masse als Metallrohre gleicher Steifigkeit. Sie werden deshalb vor allem als Walzen verwendet, z.B. in Folienwalzwerken, als Druckwalzen, Farbwalzen und Papierleitwalzen.

Die Erfindung wird im folgenden beispielhaft beschrieben:
Kohlenstoffaser-Endlosgarn mit 12.000 Filamenten - Zugfestigkeit ca. 3 GPa, E-Modul ca. 250 GPa - wurde mit einem Epoxidharzsystem im B-Zustand imprägniert und zu einer Schicht mit parallel angeordneten Filamenten ausgelegt. Durch Bearbeiten mit Rollen wurden Luftblasen aus der Schicht gedrückt, die Packungsdichte erhöht und 0,125 mm dicke Laminatschichten mit einem Flächengewicht von durchschnittlich 220 g/m² erzeugt. Die Laminatschichten wurden auf einen hohlen zylindrischen Stahldorn, Durchmesser 42,5 mm, gewickelt, der mehrere Bohrungen in der Mantelfläche und eine in eine Stirnfläche eingelassene Zuführung für Druckluft enthielt. Auf den Dorn war ein Schlauch aus Silicongummi mit einer Wandstärke von etwa einem Millimeter aufgezogen und an den Enden des Dorns mit Schellen befestigt. Die Laminatschichten wurden mit leichter Vorspannung auf den Dorn gewickelt, wobei die Filamente im wesentlichen in Richtung der Dornachse verliefen. Auf den zylindrischen Wickelkörper mit einem äußeren Durchmesser von etwa 69 mm wurde ein Aluminiumrohr aufgeschoben, dessen Innendurchmesser 70 mm betrug, Außendurchmesser 74 mm. Der Wickelkörper wurde auf etwa 60 °C erwärmt und durch Aufblasen des Silicongummischlauchs mit geringem Überdruck gegen die Innenwand des Rohrs gepreßt und nach einer Verweilzeit von 30 min wurde die Temperatur auf 150 °C und der Druck auf 5 bar erhöht. Die Haltezeit betrug ca. 90 min, anschließend wurde die Anordnung unter Druck abgekühlt, entspannt und das Rohr vom Dorn abgezogen.

Das etwa 2 mm-dicke Mantelrohr aus Aluminium und das Kernrohr aus kohlenstoffaserverstärktem Kohlenstoff mit einer Wandstärke von etwa 10 mm waren fest miteinander verzahnt. Die Rohrkombination wurde auf eine Länge von 2650 mm geschnitten und in die Rohrenden Lagerzapfen eingepreßt. Verwendet wird das Rohr als Druckwalzen.

## Patentansprüche

1. Verfahren zum Herstellen eines Rohres aus faserverstärktem Kunststoff mit Duroplastmatrix, das eine Metallbeschichtung aufweist und das eine hohe Biegefestigkeit hat,
indem
- mit einem Duroplastharz imprägnierte Gelege aus unidirektional ausgerichteten Fasern so auf einen in radiale Richtung dehnbaren Dorn gewickelt werden, daß die Faserbündel parallel zur Achse des Dorns verlaufen und der Dorn von einem eine Harzmatrix enthaltenden Faserkörper vollständig umgeben ist,
- der mit den Fasergelegen umwickelte Dorn in ein dünnwandiges Metallrohr eingelegt,
- der auf den Dorn gewickelte Körper durch Dehnen des Dorns gegen die Innenwand des Metallrohrs gepreßt,
- durch Erhitzen der Anordnung auf die Härtungstemperatur des Duroplasten unter Aufrechterhaltung des Anpreßdrucks des Dorns eine feste Verbindung zwischen Wickelkörper und Metallrohr gebildet
- und nach Zurücknahme der Dehnung der Dorn aus dem metallbeschichteten, faserverstärkten Kunststoffrohr entfernt wird.

2. Verfahren nach Patentanspruch 1,
dadurch gekennzeichnet,
daß Wickelkörper verwendet werden, deren Außendurchmesser höchstens einen Millimeter kleiner sind als der Innendurchmesser des Metallrohrs.

3. Verfahren nach den Patentansprüchen 1 und 2,
dadurch gekennzeichnet,
daß die Innenfläche des Metallrohrs mit riefenartigen Vertiefungen versehen wird.

4. Verfahren nach den Patentansprüchen 1, 2 und 3,
dadurch gekennzeichnet,
daß ein Stahlrohr verwendet wird.

5. Verfahren nach den Patentansprüchen 1 bis 4,
dadurch gekennzeichnet,
daß Kohlenstoffasern als Verstärkungsfasern verwendet werden.

6. Verfahren nach den Patentansprüchen 1 bis 5,
dadurch gekennzeichnet,
daß Epoxidharz als Duroplast verwendet wird.

7. Verfahren zum Herstellen eines Rohres aus faserverstärktem Kunststoff mit Duroplastmatrix, das eine Metallbeschichtung aufweist und das eine hohe Biegefestigkeit hat,
indem
- mit einem Duroplastharz imprägnierte Gelege aus unidirektional ausgerichteten Fasern so auf einen in radiale Richtung dehnbaren Dorn gewickelt werden, daß die Faserbündel parallel zur Achse des Dorns verlaufen und der Dorn von einem eine Harzmatrix enthaltenden Faserkörper vollständig umgeben ist,
- der mit den Fasergelegen umwickelte Dorn in ein druckfestes Hilfsrohr eingelegt wird, dessen Innenwand vorher mit einer Metallfolie belegt worden ist,
- der auf den Dorn gewickelte Körper durch Dehnen des Dorns gegen die auf der Innenwand des Hilfsrohres befindliche Metallfolie gepreßt,
- durch Erhitzen der Anordnung auf die Härtungstemperatur des Duroplasten unter Aufrechterhaltung des Anpreßdrucks des Dorns eine feste Verbindung zwischen Wickelkörper und Metallfolie gebildet
- und nach Zurücknahme der Dehnung des Dorns, der Dorn aus dem metallbeschichteten, faserverstärkten Kunststoffrohr herausgezogen und das Hilfsrohr von dem metallbeschichteten, faserverstärkten Kunststoffrohr entfernt wird.

8. Verfahren nach Patentanspruch 7,
dadurch gekennzeichnet,
daß Wickelkörper verwendet werden, deren Außendurchmesser höchstens einen Millimeter kleiner sind als der Innendurchmesser des mit Metallfolie belegten Hilfsrohres.

9. Verfahren nach den Patentansprüchen 7 und 8,
dadurch gekennzeichnet,
daß die Innenfläche der in das Hilfsrohr eingelegten Metallfolie aufgerauht oder mit riefenartigen Vertiefungen versehen wird.

10. Verfahren nach den Patentansprüchen 7, 8 und 9,
dadurch gekennzeichnet,
daß Kohlenstoffasern als Verstärkungsfasern verwendet werden.

11. Verfahren nach den Patentansprüchen 7 bis 10,
dadurch gekennzeichnet,
daß Epoxidharz als Duroplast verwendet wird.

## Claims

1. Process for the production of a fibre-reinforced plastics tube having a matrix of thermoset plastics and which has a metal coating and a high bending strength, in which
- layers formed of unidirectionally aligned fibres which are impregnated with a thermosetting resin are so wrapped on a mandrel expandable in the radial direction that the fibre bundle extends parallel to the axis of the mandrel and the mandrel is surrounded completely by a fibre body containing a resin matrix,
- the mandrel wrapped with the fibre layers is inserted in a thin walled metal tube,
- the body wrapped on the mandrel is pressed by expansion of the mandrel against the inside wall of the metal tube,
- a firm connection between wrapping body and metal tube is formed by heating of the arrangement at the hardening temperature of the thermosetting resin while maintaining the contact pressure of the mandrel
- and, after retraction of the expansion, the mandrel is removed from the metal-laminated fibre-reinforced plastics tube.

2. Process according to Claim 1, characterised in that wrapped bodies are used whose external diameter are at most 1 mm less than the internal diameter of the metal tube.

3. Process according to Claims 1 and 2, characterised in that the internal surface of the metal tube is provided with groove-like impressions.

4. Process according to Claims 1, 2 and 3, characterised in that a steel tube is used.

5. Process according to Claims 1 to 4, characterised in that carbon fibres are used as reinforcing fibres.

6. Process according to Claims 1 to 5, characterised in that epoxy resin is used as thermosetting material.

7. Process for the production of a fibre reinforced plastics tube having a matrix of thermoset plastics which has a metal coating and a high bending strength, in which
- layers formed of unidirectionally aligned fibres which are impregnated with a thermosetting resin are so wrapped on a mandrel expandable in the radial direction that the fibre bundle extends parallel to the axis of the mandrel and the mandrel is surrounded completely by a fibre body containing a resin matrix,
- the mandrel wrapped with the fibre layers is inserted in a pressure resistant auxiliary tube whose inside wall has previously been covered with a metal foil,
- the body wrapped on the mandrel is pressed against the metal foil located on the inside wall of the auxiliary tube by expansion of the mandrel,
- a firm connection between wrapped body and metal foil is formed by heating of the arrangement to the hardening temperature of the thermosetting material while maintaining the contact pressure of the mandrel,
- and, after retraction of the expansion of the mandrel, the mandrel is withdrawn from the metal-laminated fibre-reinforced plastics tube and the auxiliary tube is removed from the metal-laminated fibre-reinforced plastics tube.

8. Process according to Claim 7, characterised in that wrapped bodies are used whose external diameters are at most 1 mm less than the internal diameter of the auxiliary tube covered with the metal foil.

9. Process according to Claim 7 and 8, characterised in that the inside surface of the metal foil inserted in the auxiliary tube is roughened or provided with groove-like impressions.

10. Process according to Claim 7, 8 and 9, characterised in that carbon fibres are used as reinforcing fibres.

11. Process according to Claims 7 to 10, characterised in that epoxy resin is used as thermosetting material.

## Revendications

1. Procédé de fabrication d'un tube en matière plastique renforcé de fibres à revêtement métallique par une matrice en duroplaste, et qui a une résistance élevée à la flexion :
- en bobinant une nappe imprégnée de résine duroplaste, en fibres orientées monodirectionnellement sur un mandrin dilatable radialement, de sorte que les faisceaux de fibres s'étendent parallèlement à l'axe du mandrin entouré complètement par un corps fibreux contenant une matrice de résine,
- en insérant le mandrin entourée de nappe de fibres dans un tube métallique de faible épaisseur,
- en comprimant le corps bobiné sur le mandrin par extension du mandrin contre la paroi interne du tube métallique,
- par chauffage de l'assemblage à le température de durcissement du duroplaste en maintenant la pression de compression du mandrin on réalise une liaison solide entre le corps de bobine et le tube métallique,
- et après suppression de l'extension, on retire le mandrin du tube en matière plastique renforcée de fibres doublé de métal.

2. Procédé selon la revendication 1, caractérisé en ce qu'on utilise des corps bobinés dont le diamètre extérieur est au plus inférieur de 1 mm au diamètre intérieur du tube métallique.

3. Procédé selon les revendications 1 et 2, caractérisé en ce que la surface interne du tube métallique est munie de cannelures,

4. Procédé selon les revendications 1, 2 et 3, caractérisé en ce qu'on utilise un tube en acier.

5. Procédé selon les revendications 1 à 4, caractérisé en ce qu'on utilise des fibres de carbone comme fibres de renfort.

6. Procédé selon les revendications 1 à 5, caractérisé en ce qu'on utilise de la résine époxy comme duroplaste.

7. Procédé de fabrication d'un tube en matière plastique renforcé de fibres à revêtement métallique par une matrice duroplaste et qui a une résistance élevée à la flexion :
- en bobinant une nappe imprégnée de résine duroplaste, en fibres orientées monodirectionnellement sur un mandrin dilatable radialement, de sorte que les faisceaux de fibres s'étendent parallèlement à l'axe du mandrin entouré complètement par un corps fibreux contenant une matrice de résine,
- en insérant le mandrin entouré de nappes de fibres dans un tube métallique auxiliaire résistant à la pression dont on a revêtu au préalable la paroi interne d'une feuille métallique,
- en comprimant le corps bobiné sur le mandrin par extension du mandrin contre la feuille métallique se trouvant sur la paroi interne du tube métallique,
- par chauffage de l'assemblage à la température de durcissement du duroplaste en maintenant la pression de compression du mandrin on réalise une liaison solide entre le corps bobiné et la feuille métallique et
- après suppression de l'extension du mandrin, on retire le mandrin du tube en matière plastique renforcée de fibres et recouvert de métal et on retire le tube auxiliaire du tube en matière plastique renforcé de fibres recouvert de métal.

8. Procédé selon la revendication 7, caractérisé en ce qu'on utilise des corps bobinés dont le diamètre extérieur est au plus inférieur de 1 mm au diamètre intérieur du tube auxiliaire revêtu de feuille métallique.

9. Procédé selon les revendications 7 et 8, caractérisé en ce que la surface interne de la feuille métallique placée dans le tube auxiliaire est rugueuse ou elle est munie de cannelures.

10. Procédé selon les revendications 7, 8 et 9, caractérisé en ce qu'on utilise des fibres de carbone comme fibres de renfort.

11. Procédé selon les revendications 7 à 10, caractérisé en ce qu'on utilise de la résine époxyde comme duroplaste.
